# EUROPEAN PATENT SPECIFICATION

(11) **EP 3 636 383 B1**
(45) Date of publication and mention of the grant of the patent: **14.12.2022**
(21) Application number: 19202588.0
(22) Date of filing: 10.10.2019
(51) Int. Cl.: B23Q 1/01, B23Q 7/04, B23Q 11/00

(54) **WORK CENTRE TO PROCESS SECTION BARS MADE OF ALUMINIUM LIGHT ALLOYS PVC OR THE LIKE**
BEARBEITUNGSZENTRUM FÜR PROFILE AUS ALUMINIUM, LEICHTLEGIERUNGEN ODER PVC.
CENTRE D'USINAGE POUR PROFILES EN ALUMINIUM, ALLIAGES LEGERS OU PVC.

(30) Priority: 10.10.2018 IT 201800009315
(43) Date of publication of application: 15.04.2020
(73) Proprietor: F.O.M. Industrie S.r.l., 47841 Cattolica (IT)
(72) Inventor: LATTANZI, Lorenzo, 61121 Pesaro (PU) (IT)
(74) Representative: Manconi, Stefano

(56) References cited:
- EP-A1- 1 134 055
- EP-A1- 2 842 705
- DE-A1- 19 732 608
- DE-U1-202017 003 923

## Description

### TECHNICAL FIELD

The present invention relates to a work centre to process section bars made of aluminium, light alloys, PVC or the like, according to the preamble of claim 1. EP 1 134 055 A1 discloses a similar work center but without a fairing.

### STATE OF THE ART

In the section bar processing field, it is known to provide a work centre of the type comprising an elongated base, which extends in a horizontal first direction, is substantially U-shaped, is limited by two internal side faces provided with a pair of first longitudinal guide members and is further limited by two external side walls provided with a pair of second longitudinal guide members. The work centre further comprises a plurality of support bars, each of which is mounted on the base parallel to a horizontal second direction and transverse to the first direction, is slidably coupled to the first longitudinal guide members to move along the base in the first direction, and supports at least one holding unit designed to retain at least one section bar.

The work centre further has an overhead crane comprising a pair of vertical uprights slidingly coupled to the second longitudinal guide members, and a horizontal crosspiece, which extends above the base in the second direction, and is provided with an operating head for machining (for example cutting and/or milling) the section bars.

The overhead crane is provided with a fairing, which extends about the overhead crane and is fixed to the overhead crane to move along the base in the first direction.

The fairing comprises a pair of front walls substantially parallel to each other and perpendicular to the first direction and a pair of side walls substantially parallel to each other and perpendicular to the second direction. Each front wall has an opening suitable for being slidably engaged by the support bars and by the relative holding units, wherein each side wall is provided with a lower tank for collecting machining chips and/or scraps produced by the operating head.

The base further supports a belt conveyor mounted centrally between the first longitudinal guide members and below the support bars to remove the machining chips and/or scraps from the work centre.

Known work centres of the type described above have some drawbacks mainly due to the fact that the aforementioned lower collection tanks are able to collect relatively small amounts of machining chips and/or scraps and are unable to convey the machining chips and/or scraps on the conveyor belt.

### OBJECT OF THE INVENTION

The object of the present invention is to provide a work centre to process section bars made of aluminium, light alloys, PVC or the like, which is free from the aforementioned drawbacks and is simple and inexpensive to implement.

According to the present invention, it is provided a work centre to process section bars made of aluminium, light alloys, PVC or the like as claimed in the appended claims.

### BRIEF DESCRIPTION OF THE DRAWINGS

The present invention will now be described with reference to the annexed drawings showing a non-limiting embodiment, wherein:
Figure 1 is a schematic perspective view, with parts removed for clarity's sake, of a preferred embodiment of the work centre of the present invention;
Figure 2 is a schematic perspective view, with parts removed for clarity's sake, of a first detail of the work centre of Figure 1;

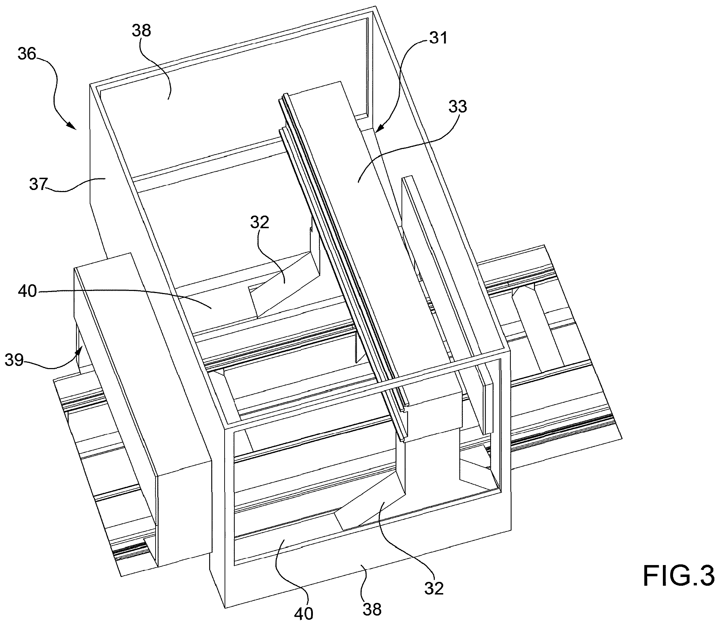

Figure 3 is a schematic perspective view, with parts removed for clarity's sake, of a second detail of the work centre of Figure 1;

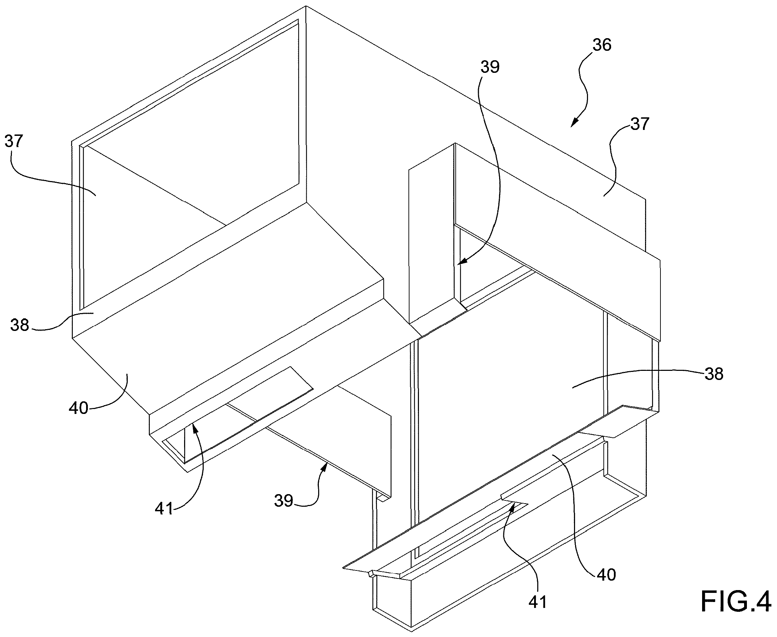

Figure 4 is a schematic perspective view, with parts removed for clarity's sake, of a detail of Figure 3; and
Figure 5 is a schematic front view, with parts in section and parts removed for clarity's sake, of the work centre of Figure 1.

### PREFERRED EMBODIMENT OF THE INVENTION

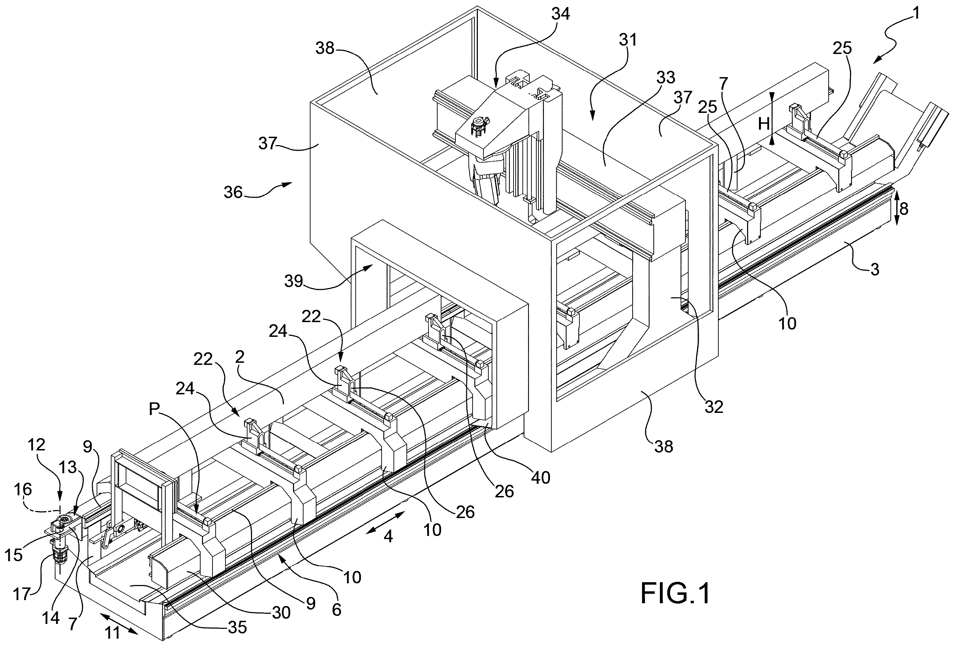

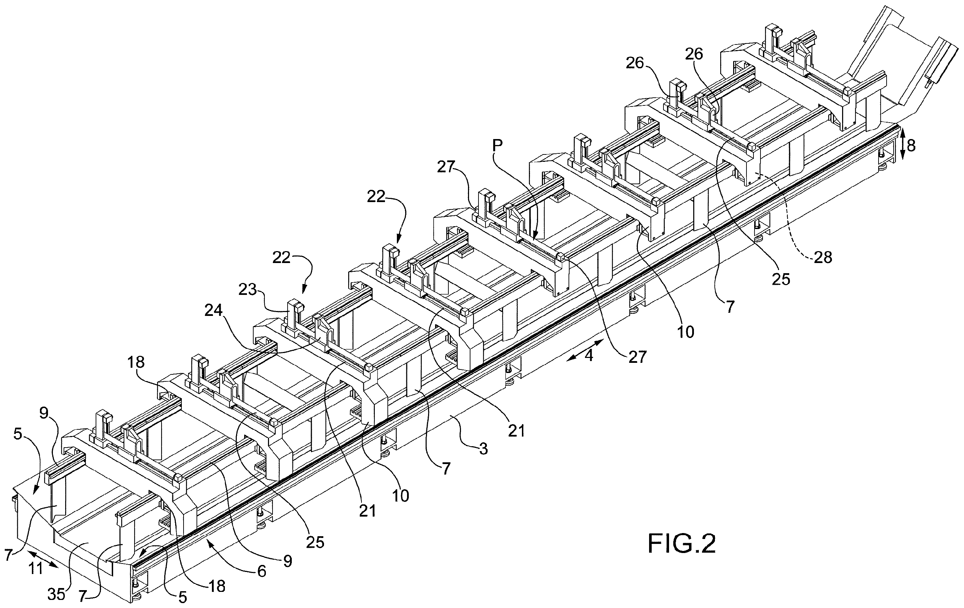

With reference to Figures 1 and 2, the reference number 1 indicates, as a whole, a work centre to process section bars 2 made of aluminium, light alloys, PVC or the like having an elongated shape.

The work centre 1 comprises an elongated base 3, which extends in a horizontal direction 4 and is substantially U-shaped.

The base 3 is limited by two upper faces 5 inclined towards the centre of the base 3. It is further limited by two parallel and opposite side faces 6 and supports two rows of vertical uprights 7 parallel to each other and to the direction 4.

The uprights 7 of each row of uprights 7 extend upwardly from a relative face 5 in a vertical direction 8 transverse to the direction 4 and carry a longitudinal guide member 9 parallel to the direction 4 and connected at their free ends.

The work centre 1 further has a plurality of support bars 10, which extend between the longitudinal members 9 in a horizontal direction 11 orthogonal to the directions 4 and 8 and are slidably coupled to the longitudinal members 9 to be moved by an actuation device 12 along the base 3 in the direction 4.

The device 12 comprises, in this case, two belt conveyors 13 parallel to each other (only one of which is shown in Figure 1), which extend in the direction 4 and are mounted on opposite sides of the two longitudinal members 9 in the direction 11.

Each conveyor 13 comprises a belt 14 wound in a ring about a pair of transmission pulleys 15 (only one of which is shown in Figure 1) mounted to rotate about respective rotation axes 16 parallel to each other and to the direction 8.

In the case shown in Figure 1, each conveyor 13 is provided with an actuation motor 17 able to rotate the relative pulleys 15 about the axes 16. According to a variant not shown, the device 12 comprises a single actuation motor connected with the pulleys 15 of one of the conveyors 13 and a motion transmission system to the pulleys 15 of the other conveyor 13.

According to a further variant not shown, the belts 14 are removed and replaced with respective chains or ropes.

Each bar 10 is provided with two hooking devices 18 movable between respective locking positions of the bar 10 to the belts 14 and respective release positions and with two locking devices (not shown) movable between respective locking positions of the bar 10 on the longitudinal members 9 and respective release positions.

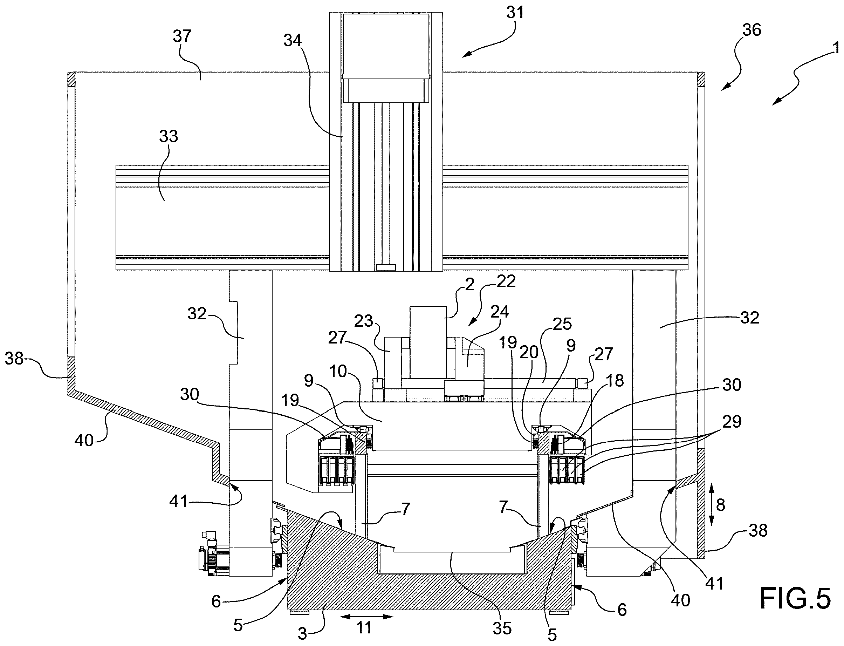

As shown in Figure 5, the correct position of each bar 10 on the longitudinal members 9 is controlled by a torsion shaft (not shown), which is mounted on the bar 10 parallel to the direction 11 and is rotatably coupled to the bar 10 to rotate, with respect to the bar 10, about a rotation axis parallel to the direction 11.

The torsion shaft (not shown) is provided with two gears 19, which are mounted on the free ends of the torsion shaft (not shown) and are coupled with respective racks 20 fixed to the longitudinal members 9 parallel to the direction 4. Each bar 10 is provided with a rectilinear guide 21 fixed on an upper face of the bar 10 parallel to the direction 11 and supports a clamping vise 22 comprising two gripping jaws 23, 24 extending upwards from the bar 10 in the direction 8.

In this case, the jaw 23 is fixed to a free end of the guide 21 and the jaw 24 is slidably coupled to the guide 21 to perform, under the thrust of an operating device not shown, linear movements in the direction 11 between a locking position and a release position of a section bar 2. Each vise 22 further comprises a support roller 25, which is mounted to rotate about a rotation axis parallel to the direction 11, and defines, together with the rollers 25 of the other vises 22, a supporting plane P for a section bar 2.

The roller 25 extends through two slits 26 formed through the relative jaws 23, 24 in the direction 11, is substantially aligned to the relative guide 21 in the direction 8 and is rotatably coupled to the free ends of the output rods 27 of two actuator cylinders 28 formed in the relative bar 10.

The roller 25 is moved by the cylinders 28 in the direction 8 between a lowered position and a plurality of raised positions based on a height H of the section bar 2 measured parallel to the direction 8.

With reference to Figure 5, each vise 22 is associated with at least one cable-carrying chain 29 housed inside a box-shaped body 30, which has an elongated shape, is fixed to one of the longitudinal members 9 parallel to the direction 4 and is open at the bottom to allow the passage of the chains 29.

According to a variant not shown, the body 30 is fixed to the uprights 7 parallel to the direction 4. In any case, the assembly defined by the chain 29 and by the body 30 is arranged at a given distance from the faces 5 of the base 3.

The chain 29 has a first free end fixed to the body 30 and a second free end fixed to the relative bar 10.

The chain 29 is configured to guide, during the displacements of the bar 10 along the base 3 in the direction 4, a plurality of electric cables (not shown) and/or of pneumatic and/or hydraulic ducts (not shown) designed to feed the bar 10 and/or the vise 22.

The work centre 1 further has an overhead crane 31 comprising a pair of vertical uprights 32, which are arranged on opposite sides of the base 3 in the direction 11 and are coupled in a known manner to the side faces 6 of the base 3 to perform linear movements along the base 3 in the direction 4.

The two uprights 32 have, connected at their free ends, a crosspiece 33, which extends above the base 3 in the direction 11 and supports an operating head 34 of known type coupled in a known way to the crosspiece 33 to perform linear movements along the crosspiece 33 in the direction 11.

The head 34 is configured to perform machining operations, such as milling and/or drilling and/or cutting, of section bars 2.

The base 3 further supports a belt conveyor 35, which extends between the two longitudinal members 9 beneath the bars 10 and is motorized to remove machining scraps and/or chips produced by the head 34.

According to a variant not shown, the conveyor 35 is removed and replaced with a central collection tank.

The overhead crane 31 is associated with a fairing 36, which extends about the overhead crane 31 and is fixed to the overhead crane 31 to move along the base 3 in the direction 4.

The fairing 36 is limited by two front walls 37 substantially parallel to each other and perpendicular to the direction 4, and is further limited by two side walls 38 substantially parallel to each other and perpendicular to the direction 11.

Each wall 37 has an opening 39 configured to be slidably engaged by the bars 10 and by the relative vises 22 during the movement of the bars 10 and/or of the overhead crane 31 in the direction 4. Each wall 38 is arranged at a distance from the other wall 38 greater than a length of the crosspiece 33 measured parallel to the direction 11. Finally, the fairing 36 is limited by a bottom wall comprising two discharging chutes 40, which are formed on opposite sides of the base 3 and of the two rows of uprights 7 in the direction 11, and extend between the upper faces 5 of the base 3 and the longitudinal members 9 to convey the machining scraps and/or chips produced by the head 34 first on the faces 5 and then on the conveyor 35. Each chute 40 has an inclination substantially equal to the inclination of the relative face 5 and is provided with an opening 41 configured to extend about a relative upright 32 of the overhead crane 31.

The presence of the uprights 7 and the distance between the longitudinal guide members 9 and the faces 5 of the base 3 allow the chutes 40 to extend below the bars 10, the box-shaped bodies 30 and the cable-carrying chains 29, substantially conveying all of the machining scraps and/or chips produced by the head 34 on the conveyor 35 and keeping substantially clean the space about the bars 10 and the vises 22 and above the faces 5 of the base 3.

## Claims

1. A work centre to process section bars (2) made of aluminium, light alloys, PVC or the like comprising an elongated base (3), which extends in a first direction (4), is substantially U-shaped, supports a central collecting device (35) for expelling machining scraps and/or chips and is provided with two longitudinal guide members (9) parallel to the first direction (4); a plurality of support bars (10), each of which is mounted on the longitudinal guide members (9), extends above the collecting device (35) in a second direction (11) transverse to the first direction (4), is movable along the base (3) in the first direction (4) and supports at least one holding unit (22) designed to hold at least one section bar (2) made of aluminium, light alloys, PVC or the like; an overhead crane (31), which is movable along the base (3) in the first direction (4) and comprises, in turn, two first vertical uprights (32), which are arranged on opposite sides of the base (3) in the second direction (11), and a horizontal crosspiece (33), which extends above the base (3) in the second direction (11) and is provided with an operating head (34) to process the section bars (2); and a fairing (36), which extends about the overhead crane (31) and is fixed to the overhead crane (31) to move along the base (3) in the first direction (4); and **characterized in that** it further comprises a plurality of second vertical uprights (7), which are distributed along the base (3), extend upward from the base (3), and are connected at their upper free ends with the two longitudinal guide members (9); the fairing (36) having two discharging chutes (40), each extending between the base (3) and a relative longitudinal guide member (9) so as to convey machining scraps and/or chips onto the collecting device (35); and each support bar (10) being associated with at least one cable-carrying chain (29), which houses, on the inside, at least one feeding duct designed to feed the support bar (10) and/or the relative holding unit (22), is connected to the base (3) and to the support bar (10) so as to guide the feeding duct during the movement of the support bar (10) along the base (3), and extends inside at least one box-shaped containment body (30), which extends above the base (3) in the first direction (4) and is fixed to the second vertical uprights (7) or to a relative longitudinal guide member (9) .

2. A work centre according to claim 1, wherein the base (3) is limited by two upper faces (5), each of them cooperating with a relative discharging chute (40) and being inclined towards the collecting device (35).

3. A work centre according to claim 1 or 2, wherein the second vertical uprights (7) are divided into two rows of second vertical uprights (7) arranged on opposite sides of the collecting device (35) in the second direction (11).

4. A work centre according to any one of the preceding claims, wherein the base (3) is limited in the second direction (11) by two opposite side faces (6); each side face (6) being provided with a guide device slidingly engaged by a relative first vertical upright (32).

5. A work centre according to any one of the preceding claims, wherein each discharging chute (40) has an opening (41) designed to receive a relative first vertical upright (32) .

6. A work centre according to any one of the preceding claims, wherein the fairing (36) comprises two front walls (37) substantially parallel to one another and perpendicular to the first direction (4), two side walls (38) substantially parallel to one another and perpendicular to the second direction (11) and a bottom wall comprising the two discharging chutes (40).

7. A work centre according to claim 6, wherein each front wall (37) has a further opening (39) configured to be engaged by the support bars (10) and by the relative holding units (22) based on the movements of the support bars (10) and/or of the overhead crane (31) in the first direction (4).

8. A work centre according to any one of the preceding claims, wherein each cable-carrying chain (29) has a first free end fixed to the box-shaped containment body and a second free end fixed to the relative support bar (10).

9. A work centre according to any one of the preceding claims, wherein each feeding duct is electric or pneumatic or hydraulic.

## Patentansprüche

1. Arbeitszentrum zum Bearbeiten von Profilstangen bzw. -stäben (2) aus Aluminium, Leichtmetalllegierungen, PVC oder dergleichen, umfassend eine längliche Basis (3), die sich in einer ersten Richtung (4) erstreckt, im Wesentlichen U-förmig ist, eine zentrale Auffang- bzw. Sammelvorrichtung (35) zum Ausstoßen von Bearbeitungsabfällen und/oder Spänen stützt bzw. trägt und mit zwei Längsführungsgliedern (9) parallel zu der ersten Richtung (4) versehen ist; eine Mehrzahl von Stütz- bzw. Trägerstangen (10), von denen jede an den Längsführungsgliedern (9) montiert ist, erstreckt sich über der Sammelvorrichtung (35) in einer zweiten Richtung (11) quer zu der ersten Richtung (4), ist entlang der Basis (3) in der ersten Richtung (4) bewegbar und stützt bzw. trägt zumindest eine Halteeinheit (22), die dazu ausgelegt ist, zumindest einen Profilstab (2) aus Aluminium, Leichtmetalllegierungen, PVC oder dergleichen zu halten; einen Brückenkran (31), der entlang der Basis (3) in der ersten Richtung (4) bewegbar ist und seinerseits zwei erste vertikale Pfosten (32), die auf gegenüberliegenden bzw. entgegengesetzten Seiten der Basis (3) in der zweiten Richtung (11) angeordnet sind, und ein horizontales Querstück (33) umfasst, das sich über der Basis (3) in der zweiten Richtung (11) erstreckt und mit einem Arbeits- bzw. Bedienkopf (34) zum Bearbeiten der Profilstangen (2) versehen ist; und eine Verkleidung (36), die sich um den Brückenkran (31) herum erstreckt und an dem Brückenkran (31) befestigt ist, um sich entlang der Basis (3) in der ersten Richtung (4) zu bewegen; und **dadurch gekennzeichnet, dass** es ferner eine Mehrzahl zweiter vertikaler Pfosten (7) umfasst, die entlang der Basis (3) verteilt sind, sich von der Basis (3) nach oben erstrecken und an ihren oberen freien Enden mit den beiden Längsführungsgliedern (9) verbunden sind; wobei die Verkleidung (36) zwei Austragsrutschen bzw. -schächte (40) aufweist, die sich jeweils zwischen der Basis (3) und einem entsprechenden Längsführungsglied (9) erstrecken, um Bearbeitungsabfälle und/oder Späne auf die Sammelvorrichtung (35) zu befördern; und jede Stützstange (10) mit zumindest einer Kabelträgerkette (29) verbunden ist, die im Inneren zumindest einen Zuführkanal beherbergt, der dazu ausgelegt ist, die Trägerstange (10) und/oder die relative Halteeinheit (22) zu speisen, mit der Basis (3) und der Trägerstange (10) verbunden ist, um den Zuführkanal während der Bewegung der Trägerstange (10) entlang der Basis (3) zu führen, und sich innerhalb zumindest eines kastenförmigen Aufnahmekörpers (30) erstreckt, der sich über der Basis (3) in der ersten Richtung (4) erstreckt und an den zweiten vertikalen Pfosten (7) oder an einem relativen Längsführungsglied (9) befestigt ist.

2. Arbeitszentrum nach Anspruch 1, wobei die Basis (3) durch zwei obere Flächen (5) begrenzt ist, von denen jede mit einer relativen Austragsrutsche (40) zusammenwirkt und zu der Sammelvorrichtung (35) hin geneigt ist.

3. Arbeitszentrum nach Anspruch 1 oder 2, wobei die zweiten vertikalen Pfosten (7) in zwei Reihen von zweiten vertikalen Pfosten (7) unterteilt sind, die auf gegenüberliegenden bzw. entgegengesetzten Seiten der Sammelvorrichtung (35) in der zweiten Richtung (11) angeordnet sind.

4. Arbeitszentrum nach einem der vorhergehenden Ansprüche, wobei die Basis (3) in der zweiten Richtung (11) durch zwei gegenüberliegende bzw. entgegengesetzte Seitenflächen (6) begrenzt ist; wobei jede Seitenfläche (6) mit einer Führungsvorrichtung versehen ist, die durch einen relativen ersten vertikalen Pfosten (32) verschiebbar in Eingriff genommen ist.

5. Arbeitszentrum nach einem der vorangehenden Ansprüche, wobei jede Austragsrutsche (40) eine Öffnung (41) aufweist, die ausgelegt ist, einen relativen ersten vertikalen Pfosten (32) aufzunehmen.

6. Arbeitszentrum nach einem der vorhergehenden Ansprüche, wobei die Verkleidung (36) zwei Vorderwände (37), die im Wesentlichen parallel zueinander und senkrecht zu der ersten Richtung (4) sind, und zwei Seitenwände (38), die im Wesentlichen parallel zueinander und senkrecht zu der zweiten Richtung (11) sind, und eine Bodenwand umfasst, die die beiden Austragsrutschen (40) umfasst.

7. Arbeitszentrum nach Anspruch 6, wobei jede Vorderwand (37) eine weitere Öffnung (39) aufweist, die konfiguriert ist, durch die Trägerstangen (10) und durch die relativen Halteeinheiten (22) basierend auf den Bewegungen der Trägerstangen (10) und/oder des Brückenkrans (31) in der ersten Richtung (4) in Eingriff genommen zu werden.

8. Arbeitszentrum nach einem der vorhergehenden Ansprüche, wobei jede Kabelträgerkette (29) ein erstes freies Ende, das an dem kastenförmigen Aufnahmekörper befestigt ist, und ein zweites freies Ende aufweist, das an der entsprechenden Trägerstange (10) befestigt ist.

9. Arbeitszentrum nach einem der vorhergehenden Ansprüche, wobei jeder Zuführkanal elektrisch oder pneumatisch oder hydraulisch ist.

## Revendications

1. Centre d'usinage pour traiter des profilés (2) réalisés à partir d'aluminium, d'alliages légers, de PVC ou similaires comprenant une base allongée (3) qui s'étend dans une première direction (4), est sensiblement en forme de U, supporte un dispositif de collecte central (35) pour expulser les copeaux et/ou déchets d'usinage et est prévue avec deux éléments de guidage longitudinaux (9) parallèles à la première direction (4) ; une pluralité de barres de support (10), dont chacune est montée sur les éléments de guidage longitudinaux (9), s'étend au-dessus du dispositif de collecte (35) dans une seconde direction (11) transversale par rapport à la première direction (4), est mobile le long de la base (3) dans la première direction (4) et supporte au moins une unité de maintien (22) conçue pour maintenir au moins un profilé (2) réalisé à partir d'aluminium, d'alliages légers, de PVC ou similaires ; un pont roulant (31) qui est mobile le long de la base (3) dans la première direction (4) et comprend, à son tour, deux premiers montants verticaux (32) qui sont agencés sur les côtés opposés de la base (3) dans la seconde direction (11), et une traverse horizontale (33) qui s'étend au-dessus de la base (3) dans la seconde direction (11) et est prévue avec une tête opérationnelle (34) pour traiter les profilés (2) ; et un carénage (36) qui s'étend autour du pont roulant (31) et est fixé sur le pont roulant (31) pour se déplacer le long de la base (3) dans la première direction (4) ; et **caractérisé en ce qu'**il comprend en outre une pluralité de seconds montants verticaux (7) qui sont répartis le long de la base (3), s'étendent vers le haut à partir de la base (3) et sont raccordés au niveau de leurs extrémités libres supérieures avec les deux éléments de guidage longitudinaux (9) ; le carénage (36) ayant deux goulottes de décharge (40), chacune s'étendant entre la base (3) et un élément de guidage longitudinal (9) relatif afin de transporter les copeaux et/ou déchets d'usinage sur le dispositif de collecte (35) ; et chaque barre de support (10) étant associée avec au moins une chaîne porte-câble (29) qui loge, à l'intérieur, au moins un conduit d'alimentation conçu pour alimenter la barre de support (10) et/ou l'unité de maintien (22) relative, est raccordée à la base (3) et à la barre de support (10) afin de guider le conduit d'alimentation pendant le déplacement de la barre de support (10) le long de la base (3) et s'étend à l'intérieur d'au moins un corps de confinement en forme de boîte (30) qui s'étend au-dessus de la base (3) dans la première direction (4) et est fixée aux seconds montants verticaux (7) ou à un élément de guidage longitudinal (9) relatif.

2. Centre d'usinage selon la revendication 1, dans lequel la base (3) est limitée par deux faces supérieures (5), chacune desquelles coopérant avec une goulotte de décharge (40) relative et étant inclinée vers le dispositif de collecte (35).

3. Centre d'usinage selon la revendication 1 ou 2, dans lequel les deux montants verticaux (7) sont divisés en deux rangées de seconds montants verticaux (7) agencés sur les côtés opposés du dispositif de collecte (35) dans la seconde direction (11).

4. Centre d'usinage selon l'une quelconque des revendications précédentes, dans lequel la base (3) est limitée dans la seconde direction (11) par deux faces latérales opposées (6) ; chaque face latérale (6) étant prévue avec un dispositif de guidage mis en prise de manière coulissante par un premier montant vertical (32) relatif.

5. Centre d'usinage selon l'une quelconque des revendications précédentes, dans lequel chaque goulotte de décharge (40) a une ouverture (41) conçue pour recevoir un premier montant vertical (32) relatif.

6. Centre d'usinage selon l'une quelconque des revendications précédentes, dans lequel le carénage (36) comprend deux parois avant (37) sensiblement parallèles l'une à l'autre et perpendiculaires à la première direction (4), deux parois latérales (38) sensiblement parallèles l'une à l'autre et perpendiculaires à la seconde direction (11) et une paroi inférieure comprenant les deux goulottes de décharge (40).

7. Centre d'usinage selon la revendication 6, dans lequel chaque paroi avant (37) a une autre ouverture (39) configurée pour être mise en prise par les barres de support (10) et par les unités de maintien (22) relatives sur la base des mouvements des barres de support (10) et/ou du pont roulant (31) dans la première direction (4) .

8. Centre d'usinage selon l'une quelconque des revendications précédentes, dans lequel chaque chaîne porte-câble (29) a une première extrémité libre fixée sur le corps de confinement en forme de boîte et une seconde extrémité libre fixée sur la barre de support (10) relative.

9. Centre d'usinage selon l'une quelconque des revendications précédentes, dans lequel chaque conduit d'alimentation est électrique ou pneumatique ou hydraulique.
